# EUROPEAN PATENT SPECIFICATION

(11) **EP 2 427 684 B1**
(45) Date of publication and mention of the grant of the patent: **08.07.2020**
(21) Application number: 10718493.9
(22) Date of filing: 03.05.2010
(51) Int. Cl.: B29C 61/00, B29C 63/00, F16L 58/18, F16L 13/02, B29C 63/42, B29C 35/08

(54) **APPARATUS AND METHOD FOR HEATING HEAT-SHRINKABLE PIPE SLEEVES**
VORRICHTUNG UND VERFAHREN ZUR ERWÄRMUNG VON WÄRMESCHRUMPFBAREN ROHRHÜLSEN
APPAREIL ET PROCÉDÉ POUR CHAUFFER DES MANCHONS DE TUYAU THERMORÉTRACTABLES

(30) Priority: 07.05.2009 GB 0907859
(43) Date of publication of application: 14.03.2012
(60) Divisional application: 20166885.2
(73) Proprietor: Saipem S.p.A., 20097 San Donato Milanese (Milano) (IT)
(72) Inventor: NARDO, Marco, 20063 Cernusco sul Naviglio (IT)
(74) Representative: Abel & Imray
(86) International application number: PCT/EP2010/002685
(87) International publication number: WO 2010/130345

(56) References cited:
- US-A- 5 073 108
- US-A- 5 205 732

## Description

### Background of the Invention

The present invention concerns an apparatus and method for heating a heat-shrinkable sleeve on a pipe. More particularly, this invention concerns a method of applying a heat-shrinkable sleeve to a portion of a pipe and a heat-delivery apparatus for heating a heat-shrinkable sleeve around a portion of a pipe.

Pipelines for transportation of hydrocarbons, such as gas or oil pipelines, typically comprise sections of pipe welded together. Each section of pipe may include one or more outer coatings including for example one or more of a corrosion resistant coating, a plastic coating, and a concrete coating. To allow the ends of two sections of pipe to be welded together, the pipe coating at each end includes a cut-back, exposing the metal pipe ends to be welded together. The exposed pipe-ends once welded together may be protected by means of arranging a heat-shrinkable sleeve over them and then attaching the sleeve to the exposed pipe ends in the welded region by heat-shrinking the sleeve onto the pipe.

A conventional method of heat-shrinking such heat-shrinkable sleeves is to apply heat manually with the use of propane torches. The use of such torches has disadvantages however. The torches are prone to heating the sleeve in an inhomogeneous way (i.e. in a non-uniform manner). Also, torch operators are required to operate the torches in the same environment as the welding process. The torches are manually moved over the sleeve surface. Manually heating the sleeve can be slow and adversely affect production speed.

US 5,073,108 and US 5,205,732 each describe a heat-delivery apparatus for heating a heat-shrinkable sleeve around a portion of a pipe. US 5,073,108 discloses a single ring of heater elements that are manually moved axially, back and forth, along the length of the pipe to pre-heat a pipe. A heat-shrinkable sleeve is then added to the pre-heated pipe and the ring of heater elements is moved along the length of the pipe to heat-shrink the sleeve onto the pipe. An operator is still required to manually move the apparatus along the sleeve to heat it. US 5,205,732 discloses a similarly arranged heat-delivery apparatus also requiring manual movement along the axis of the pipe in order to heat shrink the sleeve onto the pipe and, thus, suffers from similar disadvantages.

WO 2010/102392, published on 16 September 2010, describes an apparatus that may be used to apply a heat shrinkable sleeve around a welded pipe joint, including a heater with multiple heating zones and a controller for operating the heating device. The controller may activate the heating zones from the centre of the weld outward to eliminate pockets of air.

The present invention seeks to mitigate the above-mentioned problems. Alternatively or additionally, the present invention seeks to provide an improved method of applying a heat-shrinkable sleeve to a portion of a pipe and/or an improved heat-delivery apparatus for heating a heat-shrinkable sleeve around a portion of a pipe.

### Summary of the Invention

The present invention provides, according to a first aspect of the invention, a method of applying a heat-shrinkable sleeve to a portion of a pipe, the method including the features of claim 1. According to a second aspect of the invention, there is provided a heat-delivery apparatus for heating a heat-shrinkable sleeve around a portion of a pipe during a method of laying a pipeline, the apparatus having the features of claim 8. Optional but preferred features are set out in the dependent claims.

Providing, first, second, and third heater devices along the length of the sleeve (along the axial direction) enables the heat-delivery apparatus to generate heat to different regions of the sleeve, in a controlled manner, without requiring axial movement of heater devices during the heating time period. The time needed to heat-shrink a sleeve onto the pipe may therefore be reduced. Individually controlling two or more of the heater devices when applying heat to the heat-shrinkable sleeve may allow better control of the heat-shrinking process, for example, ensuring even heating and/or causing progressive heating/shrinking along at least a part of the length of the sleeve.

Preferably, each of the first, second and third heater devices is individually controlled to apply heat to the heat-shrinkable sleeve. The method may include applying heat to the heat-shrinkable sleeve via the heat-delivery apparatus, such that the heat generated by the first heater device during a heating time period is less than the heat generated by the second heater device during the same time period. The heat generated by the first heater device during said heating time period may also be less than the heat generated by the third heater device during the same heating time period. The heat delivery apparatus may be so shaped that in use the extreme ends of the sleeve are at or near the end of the envelope of the apparatus. Thus, the second heater device located at one end of the sleeve may represent one end of the apparatus, whilst the third heater device located at the other end of the sleeve may represent the opposite end of the apparatus. In such a case, the ends of the sleeve may be in range of a smaller area of heater devices than, say, the middle of the sleeve. In such a case, in order to heat the sleeve evenly and to promote even shrinkage, it may be advantageous for the second and third heater devices to generate more heat during the shrinking of the sleeve than the first heater device.

The method of the invention may be performed in such a manner as to generate heat to the whole of the heat-shrinkable sleeve without moving the heat-delivery apparatus along the length of the sleeve. The method may for example include maintaining the heater devices in fixed position relative to the pipe during a heating time period (for example, a time period covering the time in which all heat required to shrink the sleeve is applied). Not requiring axial movement during heating of the sleeve may further increase the speed at which a sleeve may be shrunk onto the pipe. For example, there may be times at which a plurality of the heater devices are generating heat to the sleeve, such that the majority of, and possibly substantially all of, the external surface of the sleeve is heated at a given instant in time. The distance which the active heating parts of the heating devices span, along the length of the axis of the sleeve, may be greater than the length (i.e. the dimension along the length of the axis) of the sleeve. The length of the span of the heating devices may be slightly longer than the sleeve so as to ensure effective heat treatment of the sleeve at its lateral edges. Of course, arranging the apparatus such that the heating devices span a distance much longer than the length of the sleeve is unnecessary and possibly wasteful of space and energy. The method may include heat-shielding the pipe, or its coating if such coating is present, either side of the sleeve to protect those areas of the pipe from heating by the heater devices in the region of the ends of the sleeve.

Each heater device is in the form of an infrared heater. Each heater device may be in the form of an electric heater. The method preferably includes driving each heater device with electric power which is then converted into heat and/or electromagnetic radiation, such that the sleeve is heated. If radiation, for example infrared radiation, is generated then such radiation will typically transfer heat to the sleeve by means of the sleeve absorbing the radiation. Each heater device may be in the form of an electrically powered infrared heater.

The method may be performed such that the delivery of electric power to the heating devices to cause heating of the heat-shrinkable sleeve is completed within a heating time period. Thus, at the beginning of the heating time period the sleeve may be in a fully unshrunk state. At the end of the heating time period, the sleeve may be in a fully shrunk state.

It will be appreciated that the heater devices may still cause heating of the sleeve immediately after electric power to the heater device is switched off. Thus, the heaters may continue heating the sleeve at the very end of the heating time period, despite not being provided with electrical power at that time, as a result of such residual heating effects. It will also be appreciated that the heater devices may not start heating of the sleeve immediately after application of electric power to the heater device.

The method may include causing the first heater device to heat the sleeve during said heating time period at a first power level and causing the second heater device to heat the sleeve during said heating time period at a second power level, the second power level being higher, for example more than 50% higher, than the first power level. The first and second power levels may be measured by means of measuring the thermal power per unit area delivered to an area of 4cm² at a distance of 80mm away from the centre of the heating element of the heater device. Areas of the sleeve may for example be preheated at a lower power level whilst other areas of the sleeve are being heated at a higher power level. This preheating may be followed by subsequently heating the same area of the sleeve at a higher power level. The preheating may be such that the sleeve does not shrink significantly, but does raise the temperature of the sleeve to just below the temperature at which shrinking occurs. Such a preheating step may allow progressive shrinking of the sleeve in a time-efficient manner.

In the case where the heater devices are caused to heat the sleeve by means of driving the devices with electric power, the method may include driving the first heater device during said heating time period at a first electric power level and driving the second heater device during said heating time period at a second electric power level, the second electric power level being higher than the first electric power level.

The peak power level of the second heater device during said heating time period may be higher than the peak power level of the first heater device. The average power level of the second heater device, when caused to heat the sleeve during said heating time period, may be higher than the average power level of the first heater device, when caused to heat the sleeve during said heating time period. The first heater device may have a lower power rating than the second heater device. Thus, the step of individually controlling the heater devices may consist of operating a heater device at a power different from the power at which a different heater device is operated.

During a heating time period, the time for which the first heater device is caused to heat the sleeve may be shorter than the time for which the second heater device is caused to heat the sleeve. For example, in the case where the heater devices are electric heaters, the method may include operating the heaters such that, during said heating time period, the time for which the first heater device is driven with electric power to generate heat is shorter than the time for which the second heater device is driven with electric power to generate heat. Thus, the step of individually controlling the heater devices may consist of operating a heater device to heat a portion of the sleeve over a time period different from the time period over which a different heater device is caused to heat a different portion of the sleeve.

The method may include causing, simultaneously for at least a part of a heating time period, each of the at least three of the heater devices, to heat the sleeve. For example, in the case where the heater devices are electrically powered, the method may include driving, simultaneously for at least a part of said heating time period, each heater device with electric power to cause heating of the sleeve. In the case where there are just three heater devices, then all three may be operated simultaneously. It may be the case that only some, and not all, of the heater devices are caused to heat the sleeve for at least a part of a heating time period. The method may for example include, during said heating time period, causing heating of the heat-shrinkable sleeve via at least three of the heater devices, whilst at least one other heater device is not heating the sleeve, and after a time delay causing heating of the sleeve via said at least one other heater device. For example, it may be beneficial to cause sequential or progressive shrinking of the sleeve to avoid trapping air within the sleeve as it shrinks. The heating may for example be initially centred on the centre of the sleeve, with heating of parts of the sleeve closer to either end of the sleeve commencing later. The heating of the sleeve could be conducted by heating one end first and then heating successive regions of the sleeve towards the opposite end of the sleeve in the axial direction. It is preferred that at least one heater device is heating the sleeve at any time during substantially the entire heating time period. Adjacent heater devices may, at certain times, be operated simultaneously. The method may be performed such that all heater devices of the apparatus arranged to heat the sleeve are operated simultaneously to effect heating of the entire sleeve.

Preferably there are between four and twenty, inclusive, heater devices arranged at different positions along the axis. There may be between five and ten, inclusive, heater devices. In such a case, there will be one or more heater devices positioned between the first and second heater devices. Each heater device may, in its heating configuration extend circumferentially about the axis of the pipe/apparatus, for example, thus forming a ring-like structure.

During the heating time period, the method may include a step of sensing the temperature in the region of the sleeve or the heat-delivery apparatus. Such a measurement may then be used to control the driving of at least one of the heater devices. For example, the heater devices may be arranged to cause heating of the sleeve up until the sleeve, or a region near the sleeve, reaches a predetermined temperature. The predetermined temperature is preferably less than 300 degrees Celsius. The heater devices may be controlled to maintain a predetermined temperature profile over time. The method may include providing a control unit which controls the heating of the sleeve in dependence on the temperature so sensed. One or more temperature sensors may detect the temperature and send a signal representative of the temperature measurement to the control unit. The control unit may operate by means of a feedback mechanism, whereby the heating of the sleeve caused by one or more heater devices is controlled in dependence on the temperature sensed. The method is preferably performed such that the sleeve is shrunk onto the pipe without causing the temperature of the sleeve to increase above 300 degrees Celsius.

The method comprises applying more heat to the sleeve at a first circumferential position compared to a second circumferential position along at least the majority of the length of, and preferably the entire length of, the sleeve. The first circumferential position may correspond to the circumferential position of the seam of the sleeve. The seam of the sleeve typically comprises a region of overlap of the material forming the sleeve (and therefore a thicker region of sleeve) which may require greater heating to cause shrinkage. This may be achieved by using an array of independently controllable heater elements.

The method may be performed as part of a method of laying a pipeline. The pipe onto which the sleeve is heat-shrunk may therefore be defined by part of a pipeline, for example the end of a pipeline. The method may be performed from a vessel and the pipeline may be laid at sea. The pipeline may alternatively be a cross-country pipeline. The method may include an initial step of forming the pipe by welding two pipe sections together. One of the pipe-sections may be defined by the end of a pipeline. The other of the pipe-sections may be defined by a new length of pipe to be added to the end of the pipeline. The new length of pipe may have a length of greater than 5m, and may possibly be longer than 10m. The pipe may be in the form of a metal pipe, for example a steel pipe, having a non-metallic coating and a cut-back region, onto which the sleeve is shrunk. The diameter of the pipe, for example in an uncoated region, may be more than about 150mm, and possibly greater than 400mm. The non-metallic coating may be in the form of a corrosion-resistant coating that protects the metal pipe from corrosion. The pipe may additionally comprise a further non-metallic coating, being at least 50% denser than water, such as for example a concrete coating.

The heat-shrinkable sleeve may be made from an extruded cross-linked polyolefin sheet, for example polyethylene or polypropylene. The sleeve may include an applied adhesive. The adhesive may be different for different types of pipeline operating conditions. The method may include applying an epoxy primer on either the sleeve or on the pipe surface. The sleeve may have a length (along the axis of the sleeve/pipe) of greater than 100mm, and possibly greater than 400mm. The sleeve may be shorter than 1,000mm.

The heat-delivery apparatus of the present invention may be configured to perform the method of the present invention. The heat-delivery apparatus has an axis that, in use, is alignable to coincide with the longitudinal axis of the portion of the pipe. Each of the first, second and third heater devices are so arranged that, in use, each heater device includes heating elements arranged circumferentially and symmetrically around the axis of apparatus. The apparatus may include a frame arranged to support each of the first, second and third heater devices. The frame may for example support the first, second and third heater devices in position relative to the axis of the apparatus.

The axis of the apparatus is, for the avoidance of doubt, in the form of a straight line. The axis is a notional line, and may simply be defined by the notional line which coincides with the centre of each set of circumferentially arranged heater elements which define each heater device (when in the operational / heating configuration). Parts of a long pipeline may include significant curvature such that the axis of the pipeline may not be readily defined by a straight line. It will however be understood that in the context of the present invention the curvature, if any, in the region of the portion of the pipe around which the heat-shrinkable sleeve is arranged, will be normally be negligible, such that a straight line axis is readily defined.

The apparatus includes a control unit for controlling the operation of the heater devices.

The at least three heater devices are arranged to be powered electrically under the control of the control unit. Each heating element is individually controllable by the control unit.

The heating elements of each of said at least three heater devices are in the form of infrared heaters. The heating elements of each of said at least three heater devices may be in the form of panel heaters. Each panel preferably has a flat heating face. The flat faces of the heater panels may be arranged circumferentially and symmetrically around the axis of apparatus to form the general shape of a regular polygon. Each panel may for example define one side of the polygon. Alternatively, each side of the polygon may be defined by a plurality of panels. The apparatus may include a heater-mounting structure associated with each heater element. Each heater element may include a power connector connected to a corresponding power connector of the heater-mounting structure. Each heating element may be removably mounted on the heater-mounting structure. Thus, a defective heating element may be quickly and easily replaced. The means providing the electrical connection between the heating element and the heater-mounting structure may assist in providing the mounting of the heating element on the heater-mounting structure.

The heat-delivery apparatus is preferably arranged for movement between an open position and a closed position, such that in the open position, the heat-delivery apparatus defines a pipe entry region to allow passage of a pipe into or out of the heat-delivery apparatus. The heat-delivery apparatus in its closed position may be arranged such that the heating elements of the heater devices are arranged in positions, for example circumferentially and symmetrically around the axis of apparatus, ready to generate heat evenly to a pipe located in the apparatus, the pipe entry region being closed. Each heater device may have at least two portions connected to each other by a hinge mechanism that allows rotation of one portion of the device relative to another portion of the device about an axis of rotation that is parallel to the axis of the apparatus. Arranging the heater devices in such a manner may enable movement of the heat-delivery apparatus between its open and closed positions. A single hinge mechanism may be shared by two or more of the heater devices. Each heater device may be moved between open and closed positions by means of two or more hinge joints. The heat-delivery apparatus may be so arranged that the movement between its open and closed positions is performed by means of a clamping movement. It will be understood that the heat-delivery apparatus need not physically clamp the pipe during use, but that the movement of the heat-delivery apparatus may be similar to that of a clamp.

The heat-delivery apparatus may be mounted for movement towards and away from a pipe, for example by means of movement in a direction substantially along a radius of the pipe. The apparatus may be configured to move towards the pipe in an open position, and then, when the apparatus has accommodated the pipe, to close around the pipe. The heat-delivery apparatus may further include a centring mechanism to facilitate, in use, alignment of the axis of the apparatus with the axis of a longitudinal axis of the portion of the pipe. The heat-delivery apparatus may be so configured as to maintain, in use, the heating elements of the heater device in spaced-apart relation with the heat-shrinkable sleeve around a pipe. For example, the distance between the exterior of the (uncoated) pipe at its narrowest diameter and the nearest point on an active heating part of a heating element may be between 20mm and 300mm. The distance may be between 50mm and 150mm. The centring mechanism may include legs, for example including feeler elements or pads, that contact the pipe to allow the apparatus to centre correctly on the pipe. The centring mechanism may additionally, or alternatively, include a light emitter for illuminating a part of the pipe. Two or more light emitters may each illuminate a point on the pipe, such that inspection of the points illuminated assist in the alignment of the apparatus relative to the pipe. In such a case, the centring mechanism may additionally include a light sensor for detecting light from the light emitter reflected by the pipe.

The heat-delivery apparatus may be arranged and configured to perform the method of the invention. For example, the apparatus may be configured to sense the temperature of the sleeve, for example by means of temperature sensors, then use the temperature so sensed, for example via a control unit, to control the driving of at least one of the heater devices. The method may similarly include use of the heat-delivery apparatus according to the invention.

### Description of the Drawings

Embodiments of the present invention will now be described by way of example only with reference to the accompanying drawings of which:
- Figure 1: is a schematic cross-sectional view of a joint in a pipeline showing a field joint coating and cut-back region;
- Figures 2 and 3: are perspective views of a heat delivery apparatus according to a first embodiment of the invention, the apparatus including a frame structure;
- Figure 4: is a partial view of the apparatus of Figures 2 and 3, with the frame structure removed for the sake of clarity;

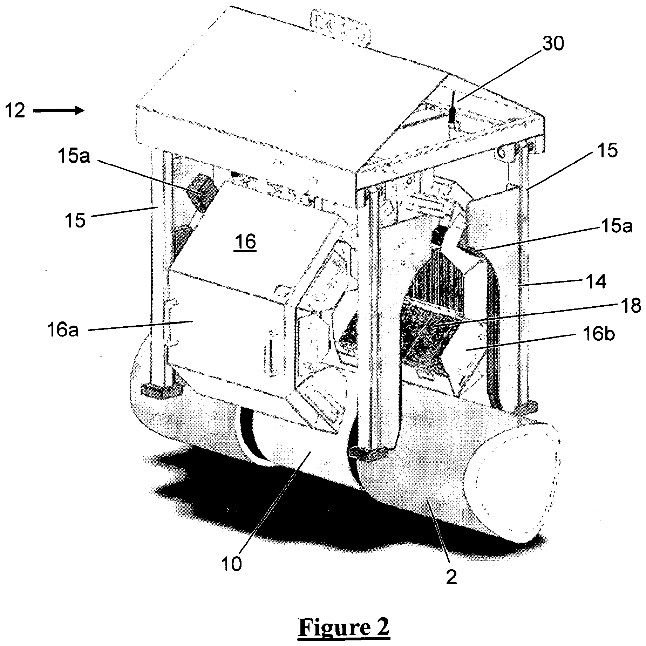

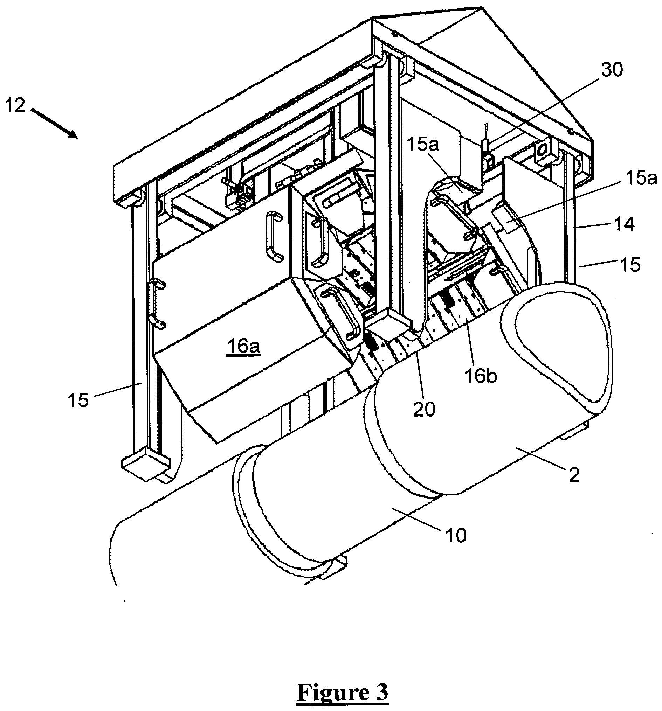

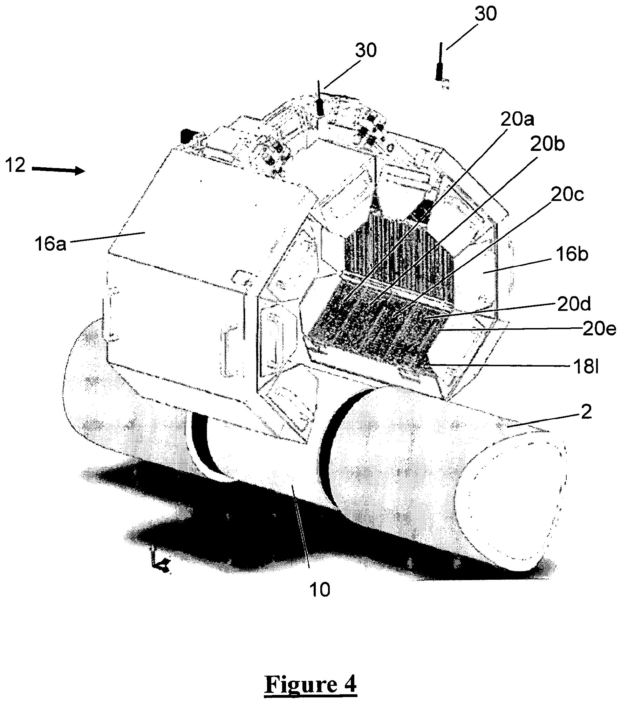

- Figure 4: is a cross-section of an upper part of the apparatus of Figures 2 and 3;

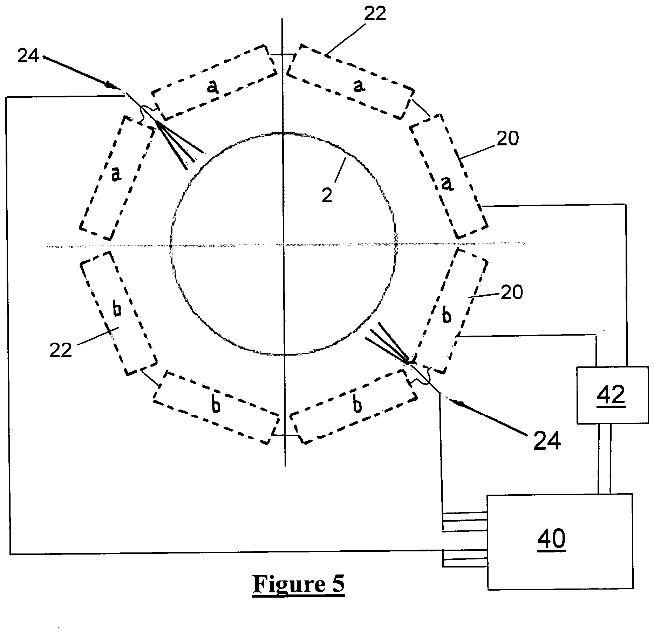

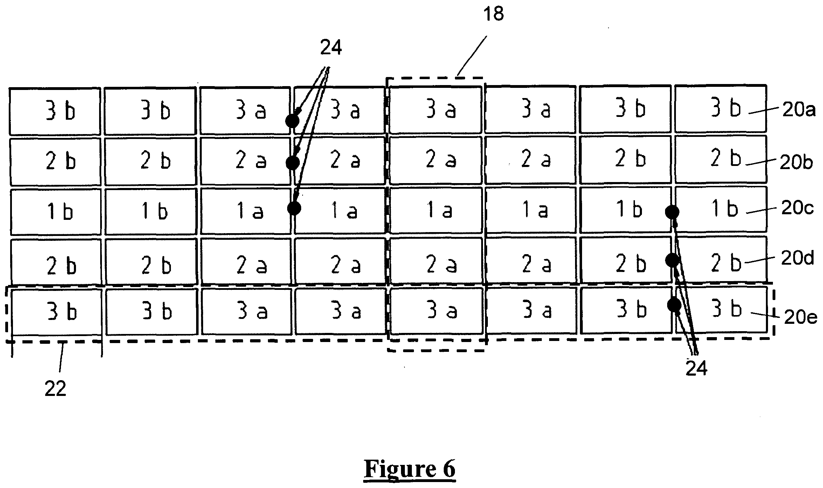

- Figures 5 and 6: are schematic views showing the layout of heater elements and pyrometers of the apparatus of Figures 2 and 3;

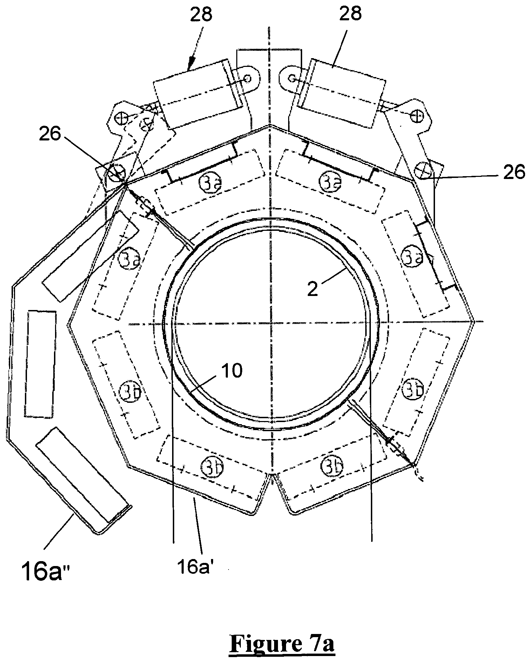

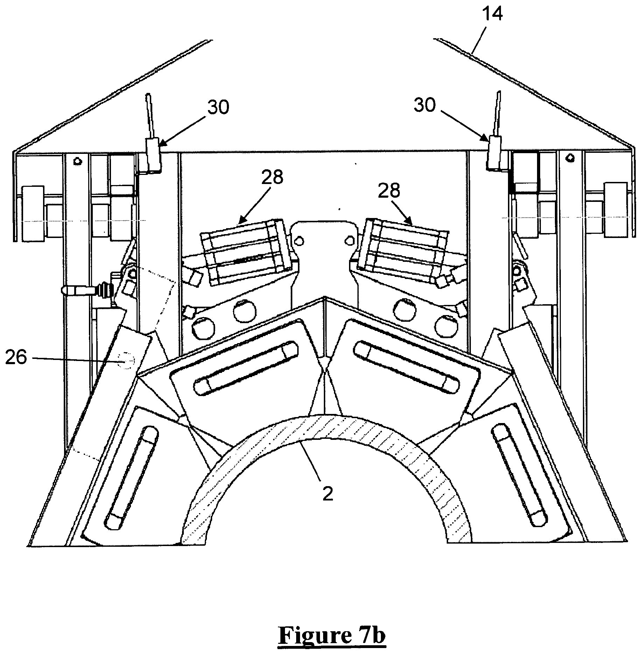

- Figures 7a and 7b: are schematic cross-sectional views of the apparatus of Figures 2 and 3, with Fig 7a showing parts of the apparatus in both an open configuration and a closed configuration as a composite view; and

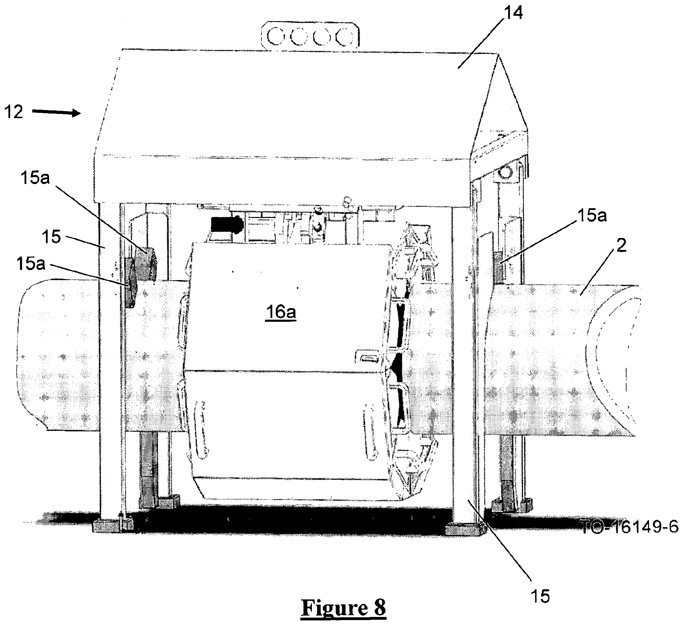

- Figure 8: shows the apparatus of Figures 2 and 3 heating a heat-shrinkable sleeve on a pipeline.

### Detailed Description

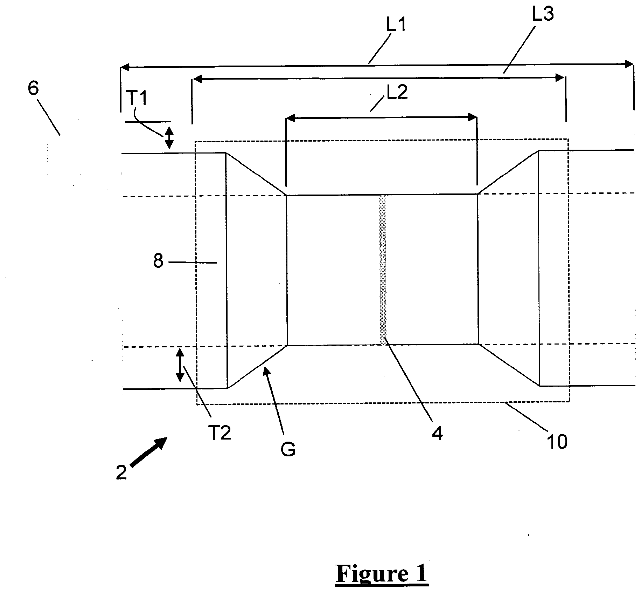

Figure 1 shows in cross-section a schematic view of a coated pipeline 2 in the region of a welded joint 4. The pipeline is coated with concrete 6 along its length, but in the region of the joint 4 there is a cut-away portion of a length L1 of about 750mm where the concrete is absent. The concrete coating 6 has a thickness T1 of about 40mm. The pipe, being of steel, has a corrosion resistant plastic coating 8 having a thickness T2 of about 2.5mm. This coating 8 is also cut away to reveal a bare field joint having a length L2 of about 350mm, in which the uncoated steel pipe is exposed. The external diameter of the uncoated (bare) pipe is about 450mm. The length of the pipe section being added to the pipeline is about 12m (40 feet). The plastic pipe coating 8 gradually reduces in thickness from 2.5mm to 0mm by means of a gradient G of about 15 to 20 degrees (the scale in Figure 1 is exaggerated for the sake of illustrating the geometry of the component parts of the pipe in the region of the joint 4). The plastic coating 8 and concrete coating 6 need to be absent in the region of the field joint so that the pipe ends can be welded together at the weld joint 4.

In order to protect the pipe 2 after the weld has been produced, a heat shrinkable sleeve (not shown in Fig. 1) is applied and shrunk onto the bare pipe so that the bare steel is covered either by the heat shrinkable sleeve or the plastic pipe coating 8. The region encompassed by the heat shrinkable sleeve, which typically has a length, L3, of about 550mm, is designated in Fig. 1 by the shaded area 10. The sleeve may have a mean diameter, in its unshrunk state, of about 10mm - 15mm greater than the pipe diameter.

The first embodiment of the invention concerns a method and apparatus for heating a heat shrinkable sleeve onto a field joint by means of a heat delivery apparatus of the type shown in Figures 2, 3 and 4. Figures 2 and 3 show the heat delivery apparatus 12 in an open configuration in which the apparatus may be moved into position around a pipe 2. The apparatus 12 includes a frame 14 (shown in Figs. 2 and 3, but omitted from Fig. 4 for the sake of clarity) and two semi-toroidal heater arrays 16a, 16b. The frame includes four legs 15, which in certain applications may be lowered so that the feet of the legs 15 rest on a surface (such as the floor/work platform/ground). The frame 14 acts to support the arrays 16 of heaters in position relative to each other. Each array 16 of heaters includes four flat panels 18, each panel 18 comprising five independently controlled heating elements 20 (controlled by a control unit described later). Thus, as shown in Figure 4 the lower most heating panel 181 of the right hand array 16b includes five rectangular heating elements 20a to 20e arranged sequentially along the axis of the apparatus 12 (the axis of the apparatus 12 in Figure 4 being parallel to but spaced apart from the axis of the pipe 2).

The heater elements 20 are arranged such that an individual heater element 20 may be readily replaced. This is achieved by ensuring that interface between each heater element 20 and the structure of the heater array 16 includes a plug and socket arrangement that both provides a physical mounting for holding the heater element in place and also an electrical connection between the heater element 20 and the control unit (described later) of the apparatus. Each heater element 20 is defined by an infra-red heater panel of a type available from Krelus AG of Hirschthal, Switzerland.

In use, the heater arrays 16a, 16b are closed around the pipe 2 to form a toroidal shape, so that a tunnel of heater elements 20 is formed. When in the closed position the heater arrays 16 effectively comprises forty heater elements 20, disposed in five octagonal rings arranged along the length of, and concentric with, the pipe 2. It will be seen that each of the heater panels 18 has a substantially flat heating surface.

The apparatus is provided with handles to ease with manual handling of the apparatus if such is required.

Figures 5 and 6 illustrate schematically the arrangement of the heater elements 20 around the pipe 2 when the apparatus is in its closed, heating, position. Figure 5 shows in cross section the pipe 2 and a single ring 22 of heater elements 20. The elements 20 in the upper half are labelled with the letter "a" whereas the heater elements 20 in the bottom half are labelled with the letter "b". Figure 6 illustrates schematically the relative position of the forty heater elements 20 (showing their position if the geometry were unrolled onto a flat plane). Thus, there are shown five rings 22 each of eight heater elements 20. Each heater panel 18 is represented in Figure 6 as a column, whereas each ring 22 is represented as a row. It will be appreciated that when the apparatus is used to heat a sleeve, the heater elements 20 represented by the right-hand end column of the table of elements 20 shown in Fig. 6 are directly adjacent to the heater elements represented by the left-hand end column.

The rings 22 of heater elements are independently controlled, according to the zone in which the ring 22 is positioned. (Each ring may effectively be considered as an independent heating device.) There are three types of zone, namely a central zone (indicated in Figure 6 by use of the number "1"), two intermediate zones (indicated in Figure 6 by use of the number "2", and two outer zones (indicated in Figure 6 by use of the number "3"). Thus, the heater element indicated by reference numeral 20a in Figure 6 has the number-letter code "*3b*", indicating that the element 20a is in an outer zone and positioned in the lower half of the ring. Figures 5 and 6 also show the position of six pyrometers 24, which are used to measure the temperature of the sleeve when the apparatus is heating the sleeve.

Figure 5 also includes a highly schematic illustration of the control unit 40 of the apparatus 12. The control unit 40 is connected to the pyrometers 24, to receive temperature measurements from the pyrometers 24. The control unit 40 is also connected to each of the heating elements that form the heating arrays 16, via a suitable power interface 42.

Figure 7a shows a cross-section of the apparatus illustrating how the apparatus engages with, and disengages from, a pipe. Figure 7b shows a cross-section of the upper part of the apparatus, and in contrast to Fig. 7a, also shows a part of the frame 14 of the apparatus. As shown in the cross-sectional views of Figure 7a and 7b, each array 16 of heaters includes a hinge mechanism 26, which allows each array 16 to be moved from an open position as shown for example in Figure 2, and a closed position as shown for example in Figure 8. Figure 7a is a composite view showing the left hand array 16a of heaters both in the open position (reference numeral 16a") and in the closed position (represented by the reference numeral 16a'). Pneumatic cylinders 28 are provided to actuate the hinge mechanisms 26, thereby effecting movement of the apparatus between the open and closed positions.

The heater arrays 16 are also mounted for movement towards and away from the pipe, in the vertical direction in the orientation shown in Figures 7a and 7b (i.e. along a radial direction, with reference to the pipe). The frame 14 moves with the heater arrays 16 when the apparatus 12 moves towards and away from the pipe.

The apparatus 12 includes a centring mechanism that assists alignment of the apparatus 12 with a pipe 2. With reference to Figs. 3 and 4, the frame 14 includes laser pointers 30, with associated light sensors (not shown), for ensuring that the heater arrays 16 are correctly aligned with, and concentric with, the pipe 2 (at least to within a tolerance of say +/- 10mm). The four laser pointers (two positioned at the front of the frame and two at the back) each illuminate a point on the pipe, the 3-dimensional position of which, relative to the frame, being sensed by a light sensor array. The orientation of the frame 14, and therefore the heater arrays 16, relative to the pipe may therefore be calculated and automatically corrected. The apparatus 12 is arranged for movement in the x, y, and z directions and about the x, y, and z axes. As perhaps best seen from Fig. 3, the centring mechanism frame also includes centring pads 15a, mounted on the legs 15, to assist in the centring of the apparatus 12 in relation to the pipe 2.

Heat shrinking of a sleeve onto a field joint of a pipe according to a method of the first embodiment of the invention will now be described with reference to the accompanying Figures.

First, with reference to Figure 1, a weld 4 is formed between one end of a pipeline and a new section of pipe. Next a FBE (Fusion Bonded Epoxy) primer is applied to the bare pipe. Then the sleeve 10, including an intermediate adhesive back coating (of a hard semi-crystalline hot melt adhesive), is assembled over the pipe 2 and the weld joint 4. The sleeve 10 is initially in the form of a rectangular double-layer (the sheet plus a layer of adhesive) piece of material, which is wrapped around the pipe so that two opposite ends of the material meet. The two ends are welded together in a known manner by means of a sleeve welder to form the tubular sleeve 10.

The heat delivery apparatus 12 is then moved towards the axis of the pipe with the heater arrays 16a, 16b in their open configuration (see Figures 2, 3, and 4). The centring pads 15a and the laser guides 30 are used to correctly align the apparatus 12 with the pipe 2. The heater arrays 16 are then moved from the open position to the closed position, such that the heater elements 20 are arranged concentrically around, and in symmetrical alignment, with the pipe (as shown in Figure 8). Thus, the heater arrays 16 form five octagonal rings of eight heater elements 20 around the pipe. The distance between the pipe exterior and the closest part of the heater elements is about 100mm.

The heater elements 20 are then operated in such a way that infra-red radiation is delivered to the heat shrinkable sleeve initially from the centre of the sleeve and then after a time delay towards its periphery. The power of radiation delivered by the heater elements is also graduated so that the central zone is heated with less power, because it has heating of the sleeve contributed by heater elements associated with the lateral zones (i.e. to promote even heating, less power is provided to the heater elements in the central zone). Thus, the heater elements are arranged such that those in zone 1 (the central zone) deliver power in the range of 0 to 4kw, whereas those in zones 2 and 3 deliver between 0 and 8kw. The heater elements in each zone are operated for about 100 seconds. Power is first delivered to those heater elements in zone 2 after the elements of zone 1 have been powered for more than half their allotted time, but before power delivery to the elements in zone 1 is stopped. Thus, after about 80 seconds, electric power is delivered to the infra-red heater elements in zones 2, the power being delivered to the elements in zones 2 for a total time of about 100 seconds. Similarly, the start of delivery of electric power to the heater elements in zones 3, at the periphery of the sleeve, is commenced after about 80 seconds from the start of delivery of power to the heater elements in zone 2, that is about 160 seconds after the start of the heating process. Thus, the time at which electric power delivery to the heater elements in zone 3 is stopped is about 260 seconds from the start of the process, that is between about 4 and 5 minutes. The exact length of time of heating, and the power at which heat delivered, is controlled by the control unit 40 in dependence on the temperature of regions of the sleeve 10 as sensed by the pyrometers 24 provided for that purpose. The feedback control employed in the first embodiment is simply to ensure that the temperature of the sleeve does not increase above a threshold level at which there is a danger of overheating. In this embodiment the threshold is set at 220 degrees Celsius (maximum desired temperature of the sleeve). Thus, the heater elements may be controlled by the control unit 40 and/or shut down to reduce the temperature in such regions, if the pyrometers 24 detect overheating. Effectively, the pyrometers 24 ensure that an optimum heating temperature is reached and then portions of the sleeve are sequentially maintained at that temperature for a chosen length of time, without overheating. The distance between the infra-red heaters and the sleeve is kept relatively low to ensure good heating characteristics and good heating efficiency.

The heater elements in zones 2 and 3 each deliver heat at a power roughly double that of the heater elements in the central zone, zone 1. The time at which such heat is delivered is however approximately the same, being about 100 seconds per heater element. Thus, the heat generated by a heater element during the heating process for heat-shrinking a single sleeve in zone 1 (the central zone) is about half that of the heat generated by a heater element during the same time period at the periphery of the sleeve, i.e. any of the heater elements in zone 3.

The sleeve is then allowed to cool, whilst the apparatus 12 is opened and subsequently retracted.

Referring to Figure 6, each of the heater elements (for example, 20a, b, c, d, e) is individually controllable. For example, greater heating power may be provided to heater elements at the same circumferential position (compared to heater elements in other circumferential positions) along the entire length of the sleeve. In order to achieve this, more power may be applied to heater elements 20a, b, c, d, e than to other heater elements. This may be of use in heating a seam region of the sleeve, since the sleeve is thicker in this region.

Greater power may be supplied to any one or more than one heater element. For example, greater power may be supplied to 20a, b, c, d or e alone. Likewise, referring to Figure 6, each of heating elements of ring 22 may be individually controlled. Greater power may be supplied to one or several of those heating elements in the ring 22.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The spatial distribution of, and timing of, the heating effected by the array of heating elements may be varied to suit particular circumstances. The individual heating elements need not individually be mounted in a plug and socket type arrangement, but may instead be hard wired in a collection of elements for each flat panel that extends along the entire length (along the sleeve axis) of the apparatus 12. Thus, five heating elements may be collected together as a removable unit, rather than having each of the heating elements removably mounted. Such an arrangement would simplify the structure of the apparatus, but would increase the cost of replacing a defective heating element. It will be appreciated that each of the five elements making up a panel may be arranged so as to be individually controlled. There may be individual control of each of the forty heating elements. Each of the forty heating elements may therefore be considered as an independent heating device.

The apparatus may of course be used with pipes of smaller diameters. The apparatus may be scaled to be suitable for use with pipes of different diameters. The alignment of the apparatus relative to the pipe may be corrected manually. There would in such an arrangement be no need for the provision of light sensors of the like. Such manual movement of the apparatus may still however be guided by the points on the pipe illuminated by the laser light.

Reference should be made to the claims for determining the true scope of the present invention.

## Claims

1. A method of applying a heat-shrinkable sleeve (10) to a portion of a pipe (2), the method including the following steps:
- providing a pipe (2),
- arranging a heat-shrinkable sleeve (10) around a portion of the pipe (2),
- arranging a heat-delivery apparatus (12) around the pipe in the region of the sleeve (10) such that an axis of the heat-delivery apparatus (12) coincides with a longitudinal axis of the pipe (2), wherein the heat-delivery apparatus (12) includes at least three heater devices (22), each heater device including heating elements (20) arranged circumferentially and symmetrically around the axis of the apparatus (12),
**characterised by** the at least three heater devices (22) being arranged at different positions along the axis of the pipe (2), such that
a first heater device (22c) is positioned closer to the centre of the sleeve, in the axial direction, than second and third heater devices (22a, 22e),
the second heater device (22a) is positioned in the region of a first end of the sleeve (10), and
the third heater device (22e) is positioned in the region of a second end of the sleeve (10) opposite to the first end, and
- individually controlling the heating elements (20) to apply more heat to the sleeve (10) at a first circumferential position compared to a second circumferential position along at least the majority of the length of the sleeve, and
- individually controlling two or more of the heater devices (22) when applying heat to the heat-shrinkable sleeve (10) to cause progressive heating along at least a part of the length of the sleeve (10),
wherein each heater device is in the form of an infrared heater device.

2. A method according to claim 1, wherein the method includes applying heat to the heat-shrinkable sleeve (10) via the heat-delivery apparatus (12), such that the heat generated by the first heater device (22c) during a heating time period is both (i) less than the heat generated by the second heater device (22a) during the same heating time period and (ii) less than the heat generated by the third heater device (22e) during the same heating time period.

3. A method according to any preceding claim, wherein the method includes causing the first heater device (22c) to heat the sleeve during a heating time period at a first power level and causing the second heater device (22a) to heat the sleeve during said heating time period at a second power level, the second power level being higher than the first power level.

4. A method according to any preceding claim, wherein, during a heating time period, the time for which the first heater device (22c) is caused to heat the sleeve (10) is shorter than the time for which the second heater device (22a) is caused to heat the sleeve (10).

5. A method according to any preceding claim, wherein the method includes causing, simultaneously for at least a part of a heating time period, each of the at least three heater devices (22), to heat the sleeve (10).

6. A method according to any preceding claim, wherein the method includes, heating the heat-shrinkable sleeve (10) via one of the first and second heater devices, whilst the other of the first and second heater devices is not heating the sleeve, and after a time delay heating the sleeve via the other of the first and second heater devices.

7. A method according to any preceding claim, wherein, during heat-shrinking of the sleeve (10), the method includes a step of sensing the temperature in the region of the sleeve or the heat-delivery apparatus (12) and then using the temperature so sensed to control the driving of at least one of the heater devices.

8. A heat-delivery apparatus (12) for heating a heat-shrinkable sleeve (10) around a portion of a pipe (2) during a method of laying a pipeline, wherein
the heat-delivery apparatus (12), in use, has an axis alignable to coincide with the longitudinal axis of the portion of the pipe (2), and
the heat-delivery apparatus (12) includes at least three heater devices (22) wherein
each of the first, second and third heater devices (22c, 22a, 22e) are so arranged that, in use, the heater device includes heating elements (20) arranged circumferentially and symmetrically around the axis of apparatus (12),
wherein the heating elements (22) of each of said at least three heater devices (22) are in the form of infrared heaters,
**characterised in that** said at least three heater devices (22) are so arranged that, in use, the first heater device (22c) is positioned between second and third heater devices (22a, 22e) in the direction of the axis of the apparatus (12), and
the heat-delivery apparatus (12) further includes a control unit (40), said at least three heater devices (22) being arranged to be powered electrically under the control of the control unit (40) and each heating element (20) being individually controllable by the control unit (40), and
the heat-delivery apparatus (12) including the control unit (40) being arranged and configured to
- apply more heat to the sleeve (10) at a first circumferential position compared to a second circumferential position along at least the majority of the length of the sleeve, and
- individually control two or more of the heater devices (22) when applying heat to the heat-shrinkable sleeve (10) to cause progressive heating along at least a part of the length of the sleeve.

9. A heat-delivery apparatus according to claim 8, wherein each infrared heater is a panel with a flat heating face.

10. A heat-delivery apparatus according to claim 9, further including
a panel-mounting structure associated with each infrared heater panel, wherein
each panel includes a power connector connected to a corresponding power connector of the panel-mounting structure, and
each panel is removably mounted on the panel-mounting structure.

11. A heat-delivery apparatus according to any of claims 8 to 10, wherein the heat-delivery apparatus is arranged for movement between an open position and a closed position, such that
in the open position, the heat-delivery apparatus defines a pipe entry region to allow passage of a pipe (2) into or out of the heat-delivery apparatus, and
in the closed position, the heating elements of the first, second and third heater devices (22) are arranged circumferentially and symmetrically around the axis of apparatus in positions ready to generate heat evenly to a pipe located in the apparatus, the pipe entry region being closed.

12. A heat-delivery apparatus according to any of claims 8 to 11, further including a centring mechanism to facilitate, in use, alignment of the axis of the apparatus with the axis of a longitudinal axis of the portion of the pipe, whilst maintaining the heating elements (20) of each heater device (22) in spaced-apart relation with the heat-shrinkable sleeve (10) around a portion of a pipe accommodated in the heat-delivery apparatus.

13. A heat-delivery apparatus according to any of claims 8 to 12, wherein the heat-delivery apparatus is arranged and configured to perform the method of any of claims 1 to 7.

14. A method according to any of claims 1 to 7, wherein the step of applying heat to the heat-shrinkable sleeve (10) via the heater devices (22) is performed so that all regions of the sleeve are heated without moving said one or more heater devices relative to the pipe (2).

15. A method according to any of claims 1 to 7 and 14, wherein the step of arranging a heat-delivery apparatus (12) around the pipe (2) in the region of the sleeve (10) is performed by arranging a heat-delivery apparatus according to any of claims 8 to 13 around the pipe.

## Patentansprüche

1. Verfahren zum Aufbringen einer wärmeschrumpfbaren Hülse (10) auf einen Abschnitt eines Rohrs (2), wobei das Verfahren die folgenden Schritte umfasst:
- Bereitstellen eines Rohrs (2),
- Anordnen einer wärmeschrumpfbaren Hülse (10) um einen Abschnitt des Rohrs (2),
- Anordnen einer Wärmeabgabeeinrichtung (12) um das Rohr im Bereich der Hülse (10), so dass eine Achse der Wärmeabgabeeinrichtung (12) mit einer Längsachse des Rohrs (2) zusammenfällt, wobei die Wärmeabgabeeinrichtung (12) mindestens drei Heizvorrichtungen (22) umfasst, und jede Heizvorrichtung Heizelemente (20) umfasst, die umfangsmäßig und symmetrisch um die Achse der Einrichtung (12) angeordnet sind,
**dadurch gekennzeichnet, dass** die mindestens drei Heizvorrichtungen (22) an unterschiedlichen Positionen entlang der Achse des Rohrs (2) angeordnet sind, so dass
eine erste Heizvorrichtung (22c) näher an der Mitte der Hülse in axialer Richtung als die zweiten und dritten Heizvorrichtungen (22a, 22e) positioniert ist,
die zweite Heizvorrichtung (22a) im Bereich eines ersten Endes der Hülse (10) positioniert ist, und
die dritte Heizvorrichtung (22e) im Bereich eines zweiten Endes der Hülse (10) entgegengesetzt dem ersten Ende positioniert ist, und
- individuelles Steuern der Heizelemente (20), um mehr Wärme auf die Hülse (10) an einer ersten Umfangsposition im Vergleich zu einer zweiten Umfangsposition entlang mindestens des Großteils der Länge der Hülse aufzubringen, und individuelles Steuern von zwei oder mehreren der Heizvorrichtungen (22) beim Aufbringen von Wärme auf die wärmeschrumpfbare Hülse (10), um eine fortschreitende Erwärmung entlang mindestens eines Teils der Länge der Hülse (10) zu veranlassen,
wobei jede Heizvorrichtung in Form einer Infrarotheizvorrichtung vorliegt.

2. Verfahren nach Anspruch 1, wobei das Verfahren das Aufbringen von Wärme auf die wärmeschrumpfbare Hülse (10) über die Wärmeabgabeeinrichtung (12) umfasst, so dass die von der ersten Heizvorrichtung (22c) während einer Heizzeitdauer erzeugte Wärme sowohl (i) geringer ist als die von der zweiten Heizvorrichtung (22a) während der gleichen Heizzeitdauer erzeugte Wärme, als auch (ii) geringer ist als die von der dritten Heizvorrichtung (22e) während der gleichen Heizzeitdauer erzeugte Wärme.

3. Verfahren nach einem der vorangehenden Ansprüche, wobei das Verfahren umfasst, die erste Heizvorrichtung (22c) zu veranlassen, die Hülse während einer Heizzeitdauer auf einen ersten Leistungspegel zu erwärmen, und die zweite Heizvorrichtung (22a) zu veranlassen, die Hülse während der Heizzeitdauer auf einen zweiten Leistungspegel zu erwärmen, wobei der zweite Leistungspegel höher als der erste Leistungspegel ist.

4. Verfahren gemäß einem vorangehenden Anspruch, wobei während einer Heizzeitdauer die Zeit, für welche die erste Heizvorrichtung (22c) veranlasst wird, die Hülse (10) zu erwärmen, kürzer als die Zeit ist, für welche die zweite Heizvorrichtung (22a) veranlasst wird, die Hülse (10) zu erwärmen.

5. Verfahren nach einem der vorangehenden Ansprüche, wobei das Verfahren umfasst, jede der mindestens drei Heizvorrichtungen (22) gleichzeitig für mindestens einen Teil einer Heizzeitdauer zu veranlassen, die Hülse (10) zu erwärmen.

6. Verfahren nach einem der vorangehenden Ansprüche, wobei das Verfahren umfasst: Erwärmen der wärmeschrumpfbaren Hülse (10) über eine der ersten und zweiten Heizvorrichtungen, während die andere der ersten und zweiten Heizvorrichtungen die Hülse nicht erwärmt, und nach einer Zeitverzögerung und Erwärmen der Hülse über die andere der ersten und zweiten Heizvorrichtungen.

7. Verfahren nach einem der vorangehenden Ansprüche, wobei während der Wärmeschrumpfung der Hülse (10) das Verfahren einen Schritt zum Erfassen der Temperatur im Bereich der Hülse oder der Wärmeabgabeeinrichtung (12) umfasst und dann die so erfasste Temperatur verwendet, um das Ansteuern mindestens einer der Heizvorrichtungen zu steuern.

8. Wärmeabgabeeinrichtung (12) zum Erwärmen einer wärmeschrumpfbaren Hülse (10) um einen Abschnitt eines Rohrs (2) während eines Verfahrens zum Verlegen einer Rohrleitung, wobei die Wärmeabgabeeinrichtung (12) im Gebrauch eine Achse aufweist, die ausrichtbar ist, um mit der Längsachse des Abschnitts des Rohrs (2) zusammenzufallen, und die Wärmeabgabeeinrichtung (12) mindestens drei Heizvorrichtungen (22) umfasst, wobei jede der ersten, zweiten und dritten Heizvorrichtungen (22c, 22a, 22e) so angeordnet sind, dass im Gebrauch die Heizvorrichtung Heizelemente (20) umfasst, die umfangsmäßig und symmetrisch um die Achse der Einrichtung (12) angeordnet sind, wobei die Heizelemente (22) jeder der mindestens drei Heizvorrichtungen (22) in Form von Infrarotheizungen vorliegen, **dadurch gekennzeichnet, dass** die mindestens drei Heizvorrichtungen (22) so angeordnet sind, dass im Gebrauch die erste Heizvorrichtung (22c) zwischen zweiten und dritten Heizvorrichtungen (22a, 22e) in Richtung der Achse der Einrichtung (12) positioniert ist, und die Wärmeabgabeeinrichtung (12) ferner eine Steuereinheit (40) umfasst, wobei die mindestens drei Heizvorrichtungen (22) angeordnet sind, um unter der Steuerung der Steuereinheit (40) elektrisch angetrieben zu werden, und jedes Heizelement (20) individuell durch die Steuereinheit (40) steuerbar ist, und die Wärmeabgabeeinrichtung (12), welche die Steuereinheit (40) beinhaltet, angeordnet und konfiguriert ist, um
- mehr Wärme auf die Hülse (10) an einer ersten Umfangsposition im Vergleich zu einer zweiten Umfangsposition entlang mindestens des Großteils der Länge der Hülse aufzubringen, und
- zwei oder mehrere der Heizvorrichtungen (22) beim Aufbringen von Wärme auf die wärmeschrumpfbare Hülse (10) individuell zu steuern, um eine fortschreitende Erwärmung entlang mindestens eines Teils der Länge der Hülse zu veranlassen.

9. Wärmeabgabeeinrichtung nach Anspruch 8, wobei jede Infrarotheizung eine Platte mit einer flachen Heizfläche ist.

10. Wärmeabgabeeinrichtung nach Anspruch 9, ferner umfassend eine Plattenbefestigungsstruktur, die jeder Infrarotheizgerätplatte zugeordnet ist, wobei jede Platte einen Leistungsverbinder umfasst, der mit einem entsprechenden Leistungsverbinder der Plattenbefestigungsstruktur verbunden ist, und jede Platte auf der Plattenbefestigungsstruktur abnehmbar angebracht ist.

11. Wärmeabgabeeinrichtung nach einem der Ansprüche 8 bis 10, wobei die Wärmeabgabeeinrichtung für eine Bewegung zwischen einer offenen Position und einer geschlossenen Position angeordnet ist, so dass in der offenen Position die Wärmeabgabeeinrichtung einen Rohreintrittsbereich definiert, um den Durchgang eines Rohrs (2) in die oder aus der Wärmeabgabeeinrichtung zu ermöglichen, und in der geschlossenen Position die Heizelemente der ersten, zweiten und dritten Heizvorrichtungen (22) umfangsmäßig und symmetrisch um die Achse der Einrichtung in Positionen betriebsbereit angeordnet sind, um Wärme gleichmäßig zu einem Rohr zu erzeugen, das sich in der Einrichtung befindet, wobei der Rohreintrittsbereich geschlossen ist.

12. Wärmeabgabeeinrichtung nach einem der Ansprüche 8 bis 11, ferner umfassend einen Zentriermechanismus, um im Gebrauch die Ausrichtung der Achse der Einrichtung mit der Achse einer Längsachse des Abschnitts des Rohrs zu erleichtern, während die Heizelemente (20) jeder Heizvorrichtung (22) in einer voneinander beabstandeten Beziehung mit der wärmeschrumpfbaren Hülse (10) um einen Abschnitt eines in der Wärmeabgabeeinrichtung untergebrachten Rohrs beibehalten werden.

13. Wärmeabgabeeinrichtung nach einem der Ansprüche 8 bis 12, wobei die Wärmeabgabeeinrichtung angeordnet und konfiguriert ist, um das Verfahren nach einem der Ansprüche 1 bis 7 durchzuführen.

14. Verfahren nach einem der Ansprüche 1 bis 7, wobei der Schritt zum Aufbringen von Wärme auf die wärmeschrumpfbare Hülse (10) über die Heizvorrichtungen (22) durchgeführt wird, so dass alle Bereiche der Hülse ohne Bewegen der einen oder mehreren Heizvorrichtungen relativ zu dem Rohr (2) erwärmt werden.

15. Verfahren nach einem der Ansprüche 1 bis 7 und 14, wobei der Schritt zum Anordnen einer Wärmeabgabeeinrichtung (12) um das Rohr (2) im Bereich der Hülse (10) durch Anordnen einer Wärmeabgabeeinrichtung nach einem der Ansprüche 8 bis 13 um das Rohr durchgeführt wird.

## Revendications

1. Procédé d'application d'un manchon thermorétractable (10) à une partie d'un tuyau (2), le procédé comprenant les étapes suivantes :
- de fourniture d'un tuyau (2),
- d'agencement d'un manchon thermorétractable (10) autour d'une partie du tuyau (2),
- d'agencement d'un appareil de distribution de chaleur (12) autour du tuyau dans la région du manchon (10) de sorte qu'un axe de l'appareil de distribution de chaleur (12) coïncide avec un axe longitudinal du tuyau (2), dans lequel l'appareil de distribution de chaleur (12) comprend au moins trois dispositifs de chauffage (22), chaque dispositif de chauffage comprenant des éléments chauffants (20) agencés de manière circonférentielle et symétriquement autour de l'axe de l'appareil (12), **caractérisé en ce que** lesdits au moins trois dispositifs de chauffage (22) sont agencés à différentes positions le long de l'axe du tuyau (2), de sorte que
un premier dispositif de chauffage (22c) soit positionné plus près du centre du manchon, dans la direction axiale, que les deuxième et troisième dispositifs de chauffage (22a, 22e),
le deuxième dispositif de chauffage (22a) soit positionné dans la région d'une première extrémité du manchon (10), et
le troisième dispositif de chauffage (22e) soit positionné dans la région d'une deuxième extrémité du manchon (10) opposée à la première extrémité, et
- de commande, individuellement, des éléments chauffants (20) pour appliquer davantage de chaleur au manchon (10) à une première position circonférentielle comparé à une deuxième position circonférentielle le long d'au moins la majeure partie de la longueur du manchon, et
- de commande, individuellement, de deux des dispositifs de chauffage (22) ou plus lors de l'application de chaleur au manchon thermorétractable (10) pour provoquer un chauffage progressif le long d'au moins une partie de la longueur du manchon (10),
dans lequel chaque dispositif de chauffage est sous la forme d'un dispositif de chauffage infrarouge.

2. Procédé selon la revendication 1, dans lequel le procédé comprend l'application de chaleur au manchon thermorétractable (10) par l'intermédiaire de l'appareil de distribution de chaleur (12), de sorte que la chaleur générée par le premier dispositif de chauffage (22c) pendant une période de temps de chauffage soit à la fois (i) inférieure à la chaleur générée par le deuxième dispositif de chauffage (22a) pendant la même période de temps de chauffage et (ii) inférieure à la chaleur générée par le troisième dispositif de chauffage (22e) pendant la même période de temps de chauffage.

3. Procédé selon l'une quelconque des revendications précédentes, dans lequel le procédé comprend la commande du premier dispositif de chauffage (22c) pour qu'il chauffe le manchon pendant une période de temps de chauffage à un premier niveau de puissance et la commande du deuxième dispositif de chauffage (22a) pour qu'il chauffe le manchon pendant ladite période de temps de chauffage à un deuxième niveau de puissance, le deuxième niveau de puissance étant plus élevé que le premier niveau de puissance.

4. Procédé selon l'une quelconque des revendications précédentes, dans lequel, pendant une période de temps de chauffage, le temps pendant lequel le premier dispositif de chauffage (22c) est amené à chauffer le manchon (10) est plus court que le temps pendant lequel le deuxième dispositif de chauffage (22a) est amené à chauffer le manchon (10).

5. Procédé selon l'une quelconque des revendications précédentes, dans lequel le procédé comprend la commande, simultanément pendant au moins une partie d'une période de temps de chauffage, de chacun desdits au moins trois dispositifs de chauffage (22), pour chauffer le manchon (10).

6. Procédé selon l'une quelconque des revendications précédentes, dans lequel le procédé comprend le chauffage du manchon thermorétractable (10) par l'intermédiaire de l'un des premier et deuxième dispositifs de chauffage, pendant que l'autre des premier et deuxième dispositifs de chauffage ne chauffe pas le manchon, et après un temps de retard, le chauffage du manchon par l'intermédiaire de l'autre des premier et deuxième dispositifs de chauffage.

7. Procédé selon l'une quelconque des revendications précédentes, dans lequel, pendant le retrait par la chaleur du manchon (10), le procédé comprend une étape de détection de la température dans la région du manchon ou de l'appareil de distribution de chaleur (12) et d'utilisation ensuite de la température ainsi détectée pour réguler la commande d'au moins l'un des dispositifs de chauffage.

8. Appareil de distribution de chaleur (12) pour chauffer un manchon thermorétractable (10) autour d'une partie d'un tuyau (2) pendant un procédé de pose d'un pipeline, dans lequel
l'appareil de distribution de chaleur (12), en utilisation, a un axe qui peut être aligné pour coïncider avec l'axe longitudinal de la partie du tuyau (2), et
l'appareil de distribution de chaleur (12) comprend au moins trois dispositifs de chauffage (22), dans lequel
chacun des premier, deuxième et troisième dispositifs de chauffage (22c, 22a, 22e) est agencé de sorte que, en utilisation, le dispositif de chauffage comprenne des éléments chauffants (20) agencés de manière circonférentielle et symétriquement autour de l'axe de l'appareil (12),
dans lequel les éléments chauffants (22) de chacun desdits au moins trois dispositifs de chauffage (22) sont sous la forme de dispositifs de chauffage infrarouge, **caractérisé en ce que** lesdits au moins trois dispositifs de chauffage (22) sont agencés de sorte que, en utilisation, le premier dispositif de chauffage (22c) soit positionné entre les deuxième et troisième dispositifs de chauffage (22a, 22e) dans la direction de l'axe de l'appareil (12), et
l'appareil de distribution de chaleur (12) comprend en outre une unité de commande (40), lesdits au moins trois dispositifs de chauffage (22) étant agencés pour être alimentés électriquement sous la commande de l'unité de commande (40) et chaque élément chauffant (20) pouvant être commandé individuellement par l'unité de commande (40), et
l'appareil de distribution de chaleur (12) comprenant l'unité de commande (40) agencée et configurée pour
- appliquer davantage de chaleur au manchon (10) à une première position circonférentielle comparé à une deuxième position circonférentielle le long d'au moins la majeure partie de la longueur du manchon, et
- commander individuellement deux des dispositifs de chauffage (22) ou plus lors de l'application de chaleur au manchon thermorétractable (10) pour provoquer un chauffage progressif le long d'au moins une partie de la longueur du manchon.

9. Appareil de distribution de chaleur selon la revendication 8, dans lequel chaque dispositif de chauffage infrarouge est un panneau avec une face de chauffage plate.

10. Appareil de distribution de chaleur selon la revendication 9, comprenant en outre :
une structure de montage de panneau associée à chaque panneau de dispositif de chauffage infrarouge, dans lequel
chaque panneau comprend un connecteur de puissance connecté à un connecteur de puissance correspondant de la structure de montage de panneau, et
chaque panneau est monté de manière amovible sur la structure de montage de panneau.

11. Appareil de distribution de chaleur selon l'une quelconque des revendications 8 à 10, dans lequel l'appareil de distribution de chaleur est agencé pour un mouvement entre une position ouverte et une position fermée, de sorte que
dans la position ouverte, l'appareil de distribution de chaleur définisse une région d'entrée de tuyau pour permettre le passage d'un tuyau (2) dans ou hors de l'appareil de distribution de chaleur, et
dans la position fermée, les éléments chauffants des premier, deuxième et troisième dispositifs de chauffage (22) soient agencés de manière circonférentielle et symétriquement autour de l'axe de l'appareil à des positions où ils sont prêts à générer de la chaleur uniformément vers un tuyau situé dans l'appareil, la région d'entrée de tuyau étant fermée.

12. Appareil de distribution de chaleur selon l'une quelconque des revendications 8 à 11, comprenant en outre un mécanisme de centrage pour faciliter, en utilisation, l'alignement de l'axe de l'appareil avec l'axe d'un axe longitudinal de la partie du tuyau, tout en maintenant les éléments chauffants (20) de chaque dispositif de chauffage (22) dans une relation espacée avec le manchon thermorétractable (10) autour d'une partie d'un tuyau reçu dans l'appareil de distribution de chaleur.

13. Appareil de distribution de chaleur selon l'une quelconque des revendications 8 à 12, dans lequel l'appareil de distribution de chaleur est agencé et configuré pour effectuer le procédé selon l'une quelconque des revendications 1 à 7.

14. Procédé selon l'une quelconque des revendications 1 à 7, dans lequel l'étape d'application de chaleur au manchon thermorétractable (10) par l'intermédiaire des dispositifs de chauffage (22) est effectuée de sorte que toutes les régions du manchon soient chauffées sans déplacer lesdits un ou plusieurs dispositifs de chauffage par rapport au tuyau (2).

15. Procédé selon l'une quelconque des revendications 1 à 7 et 14, dans lequel l'étape d'agencement d'un appareil de distribution de chaleur (12) autour du tuyau (2) dans la région du manchon (10) est effectuée en agençant un appareil de distribution de chaleur selon l'une quelconque des revendications 8 à 13 autour du tuyau.
